# FASCICULE DE BREVET EUROPEEN

(11) **EP 3 717 292 B1**
(45) Date de publication et mention de la délivrance du brevet: **26.06.2024**
(21) Numéro de dépôt: 18807660.8
(22) Date de dépôt: 30.11.2018
(51) Int. Cl.: B60K 11/04, F28F 9/00

(54) **MODULE DE REFROIDISSEMENT ET PROCEDE DE MONTAGE D'UN TEL MODULE DE REFROIDISSEMENT**
KÜHLMODUL UND VERFAHREN ZUM ZUSAMMENBAU EINES SOLCHEN KÜHLMODULS
COOLING MODULE AND METHOD FOR ASSEMBLING SUCH A COOLING MODULE

(30) Priorité: 30.11.2017 FR 1761482
(43) Date de publication de la demande: 07.10.2020
(73) Titulaire: Renault s.a.s, 92100 Boulogne Billancourt (FR)
(72) Inventeur: GUIGNARD, Fabian, 78640 Villiers Saint Frederic (FR); GREGORI, Patrice, 77760 Nanteau sur Essonne (FR)
(74) Mandataire: Renault Group
(86) Numéro de dépôt international: PCT/EP2018/083167
(87) Numéro de publication internationale: WO 2019/106155

(56) Documents cités:
- EP-A1- 1 205 332
- EP-A1- 2 966 393
- JP-A- H10 205 328
- US-A1- 2002 056 541

## Description

### 1. Domaine de l'invention

L'invention concerne un module de refroidissement et un procédé de montage d'un tel module de refroidissement.

### 2. Art antérieur

Un module de refroidissement d'un moteur de véhicule automobile comporte classiquement un radiateur, deux boîtes collectrices fixés latéralement de part et d'autre du radiateur et pour chaque réservoir d'eau, un élément de fixation de la boîte collectrice au véhicule. Les boîtes collectrices comportent des doigts de fixation venus de matière avec le réservoir et destinés à coopérer avec les éléments de fixation pour fixer chaque boîte collectrice à l'élément de fixation correspondant. Un tel module de refroidissement est montré dans le US 2002/056541.

Ainsi, pour chaque nouvelle architecture de véhicule, une adaptation de la boîte collectrice et en particulier du doigt de la boîte collectrice est nécessaire pour permettre l'intégration du module de refroidissement dans la nouvelle architecture. Cette adaptation nécessaire empêche une standardisation des modules de refroidissement et en particulier des ensembles comportant le faisceau radiateur et les boîtes collectrices.

En outre, la complexification de l'architecture des véhicules dans la région du module de refroidissement a rendu le montage plus complexe et plus long et donc plus coûteux.

Par ailleurs, le fait que le doigt de fixation soit venu de matière avec la boîte collectrice nécessite de changer tout le radiateur en cas de casse du doigt, par exemple lors d'un choc frontal du véhicule. Cette obligation de changer tout le radiateur rend la maintenance coûteuse.

### 3. Objectifs de l'invention

L'invention propose une solution visant à pallier les inconvénients précités. Un objectif de l'invention est de permettre une réduction de coûts, tant au niveau du coût du module de refroidissement qu'au niveau du coût de montage et du coût de maintenance.

### 4. Résumé de l'invention

L'invention concerne un module de refroidissement d'un moteur de véhicule, le module de refroidissement comportant un radiateur, au moins une boîte collectrice fixée au faisceau du radiateur, un élément de fixation de la boîte collectrice au véhicule, le module de refroidissement comportant en outre une pièce intermédiaire de fixation de la boîte collectrice à l'élément de fixation, la pièce intermédiaire comportant une portion de retenue ; la boîte collectrice comportant un logement agencé pour coopérer avec la portion de retenue de la pièce intermédiaire afin de fixer la pièce intermédiaire à la boîte collectrice dans une position assemblée ; la pièce intermédiaire comporte un doigt agencé pour coopérer avec l'élément de fixation afin de fixer la pièce intermédiaire à l'élément de fixation ; le doigt est en saillie latérale de la pièce intermédiaire. La présence d'une pièce intermédiaire permettant de monter la boîte collectrice sur l'élément de fixation permet de standardiser les radiateurs tout en laissant une grande liberté quant à l'architecture du véhicule et notamment quant à l'architecture de la face avant technique. En outre, dans le cadre des normes de sécurité visant à protéger les piétons en cas d'impact avec un véhicule, la pièce intermédiaire est dimensionnée pour céder en cas de choc avant le reste du module de refroidissement. Ainsi, lors des réparations consécutives à un choc, il suffira de changer la pièce intermédiaire plutôt que tout le radiateur ou plutôt qu'un autre élément du module de refroidissement plus coûteux. En outre, ce mode de fixation permet un montage simple et compact.

Selon une réalisation particulière de l'invention, la portion de retenue comporte une première partie et une deuxième partie, la première partie et la deuxième partie formant un L. Une telle géométrie de la portion de retenue permet un positionnement intuitif de la portion de retenue dans le logement du réservoir, il s'agit également d'une géométrie compacte et robuste.

Selon une réalisation particulière de l'invention, la première partie est agencée pour coulisser dans le logement du réservoir d'eau. Le coulissement de la première partie dans le logement permet une mise en place simple et rapide de la portion de retenue dans le logement.

Selon une réalisation particulière de l'invention, la deuxième partie comporte une extrémité distale équipée d'un ergot et en ce que la boîte collectrice comporte, en périphérie du logement, une languette déformable élastiquement agencée pour coopérer avec l'ergot afin de maintenir la position assemblée de la pièce intermédiaire et du réservoir. La coopération de l'ergot et de la languette permet de fixer de manière simple et rapide la portion de retenue dans le logement.

Selon une réalisation particulière de l'invention, l'ergot comporte une première face arrondie et une deuxième face plane, la première face et la deuxième face comportant une arête commune et étant agencées de sorte que lors du coulissement de la première partie de la pièce intermédiaire dans le logement du réservoir d'eau, la languette se déforme élastiquement pour glisser le long de la première face arrondie puis passe l'arête pour finir en butée contre la deuxième face. L'ergot et la languette forment ainsi un système de clip ergonomique.

Selon une réalisation particulière de l'invention, la portion de retenue et la boîte collectrice comportent chacun un orifice, l'orifice de la portion de retenue étant destiné à être en regard de l'orifice de la boîte collectrice en position assemblée de sorte à permettre la fixation de la pièce intermédiaire à la boîte collectrice par l'intermédiaire d'une tige, comme une vis ou un goujon, introduite dans les orifices. La tige introduite dans les orifices de la boîte collectrice et de la pièce intermédiaire permet de renforcer la fixation de la pièce intermédiaire au réservoir.

Selon une réalisation particulière de l'invention, le module de refroidissement comporte deux boîtes collectrices fixées latéralement de part et d'autre du faisceau du radiateur, un élément de fixation par boîte collectrice, une pièce intermédiaire par réservoir d'eau. La présence de deux boîtes collectrices réparties latéralement de part et d'autre du radiateur correspond à une architecture classique de véhicule. La répartition latérale des ensembles de fixation comportant un élément de fixation et une pièce intermédiaire permet d'espacer les points d'ancrage du module de refroidissement sur le véhicule pour obtenir une fixation plus robuste.

Selon une réalisation particulière de l'invention, le module de refroidissement comporte en outre une patte de fixation par boîte collectrice ; pour chaque boîte collectrice, la pièce intermédiaire étant destinée à être fixée à une première extrémité supérieure de la boîte collectrice et la patte étant placée à une deuxième extrémité inférieure opposée à la première extrémité. La répartition verticale des pièces intermédiaires et des pattes permet d'espacer les points d'ancrage du module de refroidissement sur le véhicule pour obtenir une fixation plus robuste.

L'invention concerne également un procédé de montage d'un module de refroidissement selon l'invention sur un véhicule caractérisé en ce qu'il comporte les étapes suivantes :
- assemblage du module de refroidissement à une traverse inférieure par l'intermédiaire des pattes de fixation des boîtes collectrices pour former un premier sous-ensemble ;
- positionnement du premier sous-ensemble à une face avant technique selon un mouvement de direction verticale ;
- fixation de la traverse inférieure à la face avant technique ;
- fixation d'une pièce intermédiaire dans le logement dédié de chaque boîte collectrice;
- assemblage d'un élément de fixation sur chaque pièce intermédiaire ;
- positionnement des éléments de fixation contre la face avant technique, ce qui permet un déplacement de la partie supérieure du module de refroidissement selon un mouvement de direction longitudinale ; et
- fixation des éléments de fixation à la face avant technique.

Un tel procédé est ergonomique, ce qui permet de limiter les coûts liés au montage du module de refroidissement. En particulier, le positionnement selon une direction longitudinale, et non selon d'autres axes, du deuxième sous-ensemble sur l'avant du véhicule permet de réduire le temps de montage. En outre, le fait que la pièce intermédiaire puisse être assemblée alors que la face avant technique est en place avec le module de refroidissement déjà partiellement monté permet de remplacer facilement la pièce intermédiaire, par exemple en cas de casse de la pièce intermédiaire suite à un choc. La maintenance est donc également simplifiée.

Selon une réalisation particulière de l'invention, l'étape de fixation d'une pièce intermédiaire dans le logement dédié de chaque boîte collectrice comporte les sous-étapes suivantes :
- coulissement de la première partie de la portion de retenue dans le logement ;
- mise en butée de la languette sur l'ergot ; et
- mise en place de la tige dans les orifices en renforcement de la position assemblée de la pièce intermédiaire et du réservoir d'eau.

La fixation d'une pièce intermédiaire est simple, rapide et donc peu coûteuse tout en étant robuste.

### 5. Liste des figures

D'autres caractéristiques et avantages innovants ressortiront de la description ci-après, fournie à titre indicatif et nullement limitatif, en référence aux dessins annexés, dans lesquels :
- La figure 1 représente une vue schématique et de face d'un module de refroidissement monté sur une face avant technique d'un véhicule selon un mode de réalisation de l'invention ;
- La figure 2 représente une vue schématique et de face d'un module de refroidissement selon un mode de réalisation de l'invention;
- La figure 3 représente une vue schématique en perspective d'un module de refroidissement équipé de deux éléments de fixation selon un mode de réalisation de l'invention ;
- La figure 4 est une vue détaillée en perspective d'un élément de fixation fixé à une boîte collectrice de module de refroidissement et monté sur une face avant technique de véhicule selon un mode de réalisation de l'invention ;
- La figure 5 est une vue détaillée d'une patte de fixation d'une boîte collectrice de module de refroidissement montée sur une traverse inférieure selon un mode de réalisation de l'invention ; et
- Les figures 6a à 6d représentent des vues détaillées en perspective et séquentielles du montage d'une pièce intermédiaire de fixation dans un logement dédié d'une boîte collectrice d'un module de refroidissement selon un procédé de l'invention.

### 6. Description détaillée

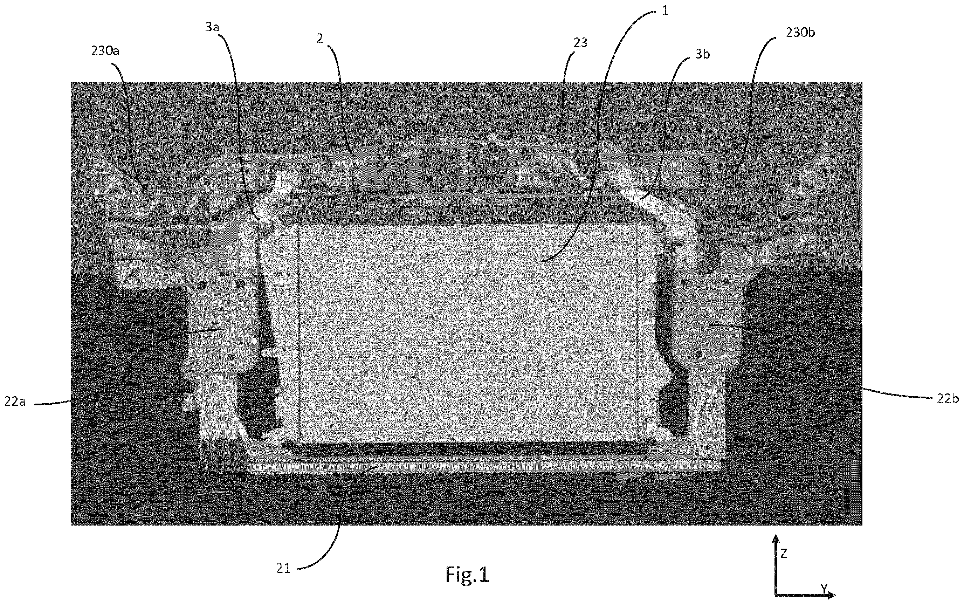

Les figures 1 à 6d représentent des éléments d'un module de refroidissement d'un moteur de véhicule automobile selon l'invention. Les figures sont orientées suivant un axe longitudinal X pointant vers l'avant, l'axe longitudinal étant parallèle à la direction principale d'élongation du véhicule et l'avant étant défini comme la direction d'avancement du véhicule en marche avant et sans rotation du volant, un axe transversal Y pointant vers la gauche du véhicule et un axe vertical Z pointant vers le haut du véhicule.

La figure 1 représente un module de refroidissement 1 monté sur une face avant technique 2 de véhicule. La face avant technique 2 est un élément d'architecture du véhicule situé à l'avant du compartiment moteur du véhicule et derrière la calandre. La face avant technique 2 comprend classiquement une traverse inférieure 21 supportant partiellement le module de refroidissement 1, deux montants latéraux 22a et 22b de part et d'autre de la face avant technique 2 et une traverse supérieure 23 apte à supporter les charnières ou la serrure du capot, la traverse comprenant à chaque extrémité un emplacement 230a et 230b de bloc optique du véhicule. En plus d'être supporté par la traverse inférieure 21, le module de refroidissement 1 est fixé en partie supérieure à la face avant technique 2 au niveau de la traverse supérieure 23 par l'intermédiaire de deux éléments de fixation 3a et 3b de part et d'autre du module de refroidissement 2.

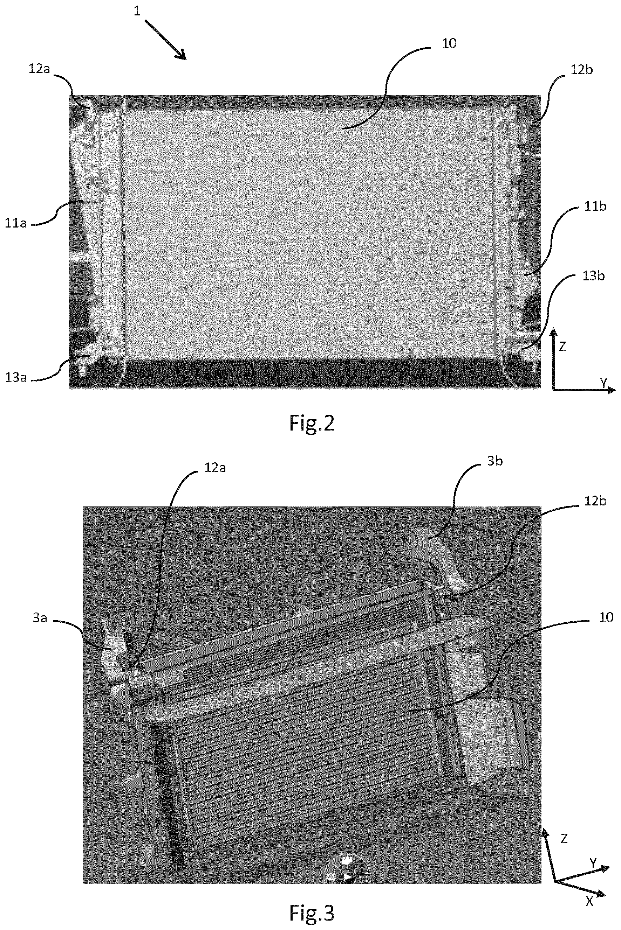

La figure 2 représente un module de refroidissement 1 avant assemblage. Le module de refroidissement 1 comporte un radiateur 10, deux boîtes collectrices 11a et 11b fixés de part et d'autre du radiateur 10 sur les tranches latérales du radiateur 10. Chaque boîte collectrice 11a et 11b est équipé d'une pièce intermédiaire 12a et 12b de fixation de la boîte collectrice à l'un des éléments de fixation 3a ou 3b. Chaque pièce intermédiaire est montée sur une extrémité supérieure de la boîte collectrice correspondant. Chaque pièce intermédiaire 12a ou 12b comporte un doigt en saillie latérale destiné à s'emboîter dans un orifice ménagé dans chaque élément de fixation 3a ou 3b. En outre, chaque boîte collectrice 11a et 11b est équipé d'une patte 13a et 13b de fixation de la boîte collectrice à la traverse inférieure 21. Chaque patte est placée sur une extrémité inférieure de la boîte collectrice correspondante. Chaque patte 13a ou 13b comporte un doigt en saillie inférieure destiné à s'emboîter respectivement dans un premier orifice et un deuxième orifice ménagés dans la traverse inférieure 21.

La figure 3 représente un module de refroidissement 1 équipé de deux éléments de fixation 3a et 3b emboîtés respectivement sur le doigt des pièces intermédiaires 12a et 12b. Selon une réalisation particulière, un joint par exemple caoutchouc est placé dans l'orifice des éléments de fixation 3a et 3b destiné à recevoir une pièce intermédiaire 12a ou 12b.

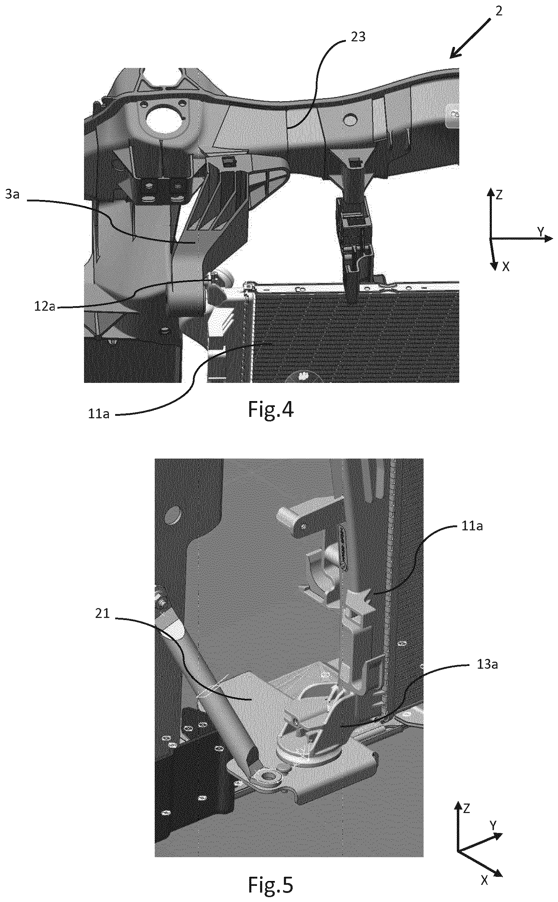

La figure 4 représente un élément de fixation 3a fixé à une boîte collectrice 11a par la pièce intermédiaire 12a. L'élément de fixation 3a est également monté sur une face avant technique 2 de véhicule et plus précisément sur la traverse supérieure 23 de la face avant technique 2. L'élément de fixation 3a est par exemple vissé ou boulonné sur la traverse supérieure 23.

La figure 5 représente une patte 13a de fixation d'une boîte collectrice 11a montée sur une traverse inférieure 21. Plus précisément, le doigt de la patte 13a est emboîté dans un orifice de la traverse inférieure 21.

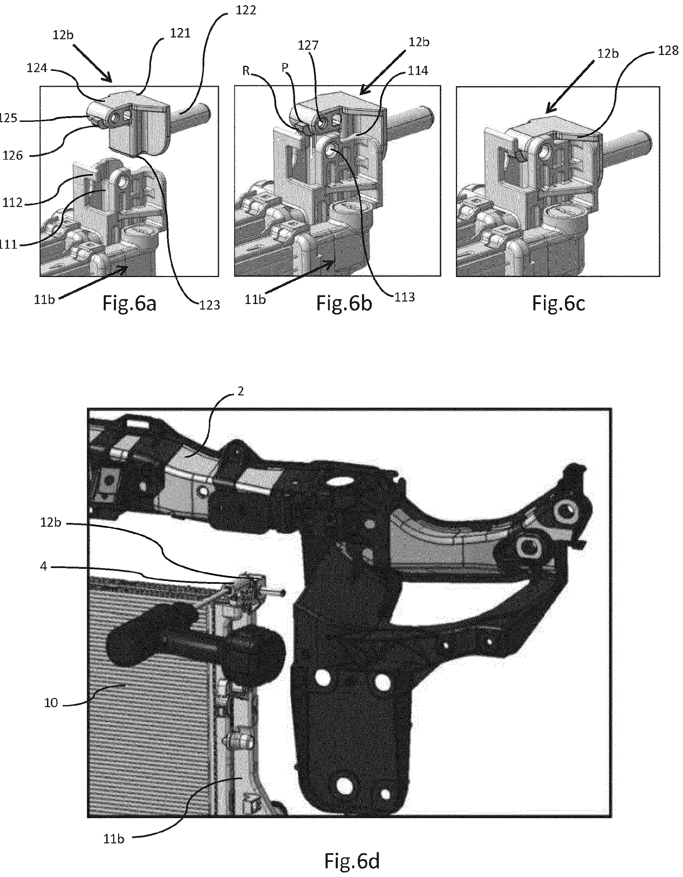

Les figures 6a à 6d représentent des vues séquentielles du montage d'une pièce intermédiaire 12b de fixation dans un logement 111 dédié d'une boîte collectrice 11b. La pièce intermédiaire 12b comporte une portion de retenue 121 et un doigt 122. Le doigt 122 est en saillie latérale de la pièce intermédiaire et est destiné à s'emboîter dans un orifice ménagé dans un élément de fixation 3b. Le logement 111 de la boîte collectrice 11b est agencé pour coopérer avec la portion de retenue 121 de la pièce intermédiaire 12b afin de fixer la pièce intermédiaire 12b à la boîte collectrice 11b dans une position assemblée.

La portion de retenue 121 comporte une première partie 123 verticale et une deuxième partie 124 transversale placée au-dessus de la première partie 123. La première partie 123 et la deuxième partie 124 forment un L. La première partie 123 est agencée pour coulisser verticalement dans le logement 111 de la boîte collectrice 11b. La deuxième partie 124 comporte une extrémité distale 125 équipée d'un ergot 126. La boîte collectrice 11b comporte, en périphérie du logement 111, une languette 112 déformable élastiquement agencée pour coopérer avec l'ergot 126 afin de maintenir la position assemblée de la pièce intermédiaire 12b et du réservoir 11b.

L'ergot 126 comporte une première face R arrondie et une deuxième face P plane. La première face R et la deuxième face P comportent une arête commune et sont agencées de sorte que lors du coulissement de la première partie 123 de la pièce intermédiaire 12b dans le logement 111 de la boîte collectrice 11b, la languette 112 se déforme élastiquement pour glisser le long de la première face R arrondie puis passe l'arête pour finir en butée contre la deuxième face P.

La portion de retenue 121 et la boîte collectrice 11b comportent chacun un orifice respectivement 127 et 113. L'orifice 127 de la portion de retenue 121 est destiné à être en regard de l'orifice 113 de la boîte collectrice 11b en position assemblée de sorte à permettre la fixation de la pièce intermédiaire 12b au réservoir 11b par l'intermédiaire d'une tige, comme une vis ou un goujon, introduite dans les orifices 127 et 113.

La portion de retenue 121 de la pièce intermédiaire 12b comporte en outre une aile 128 supérieure destinée à reposer sur un rebord supérieur 114 de la boîte collectrice 11b. Ainsi, en position assemblée de la pièce intermédiaire 12b et du réservoir 11b, un mouvement vers le bas est bloqué par la butée de l'aile 128 sur le rebord supérieur 114 ; un mouvement vers le haut est bloqué par la butée de la languette 112 contre l'ergot 126 et un mouvement transversal ou longitudinal est bloqué par la forme complémentaire de la première partie 123 de la pièce intermédiaire 12b et du logement 111 formant glissière verticalement. En outre, la position assemblée de la pièce intermédiaire 12b et du réservoir 11b est renforcée par la mise en place d'une tige, vis ou goujon, dans les orifices 127 et 113.

En périphérie du logement 111, la boîte collectrice comporte une nervure de rigidification pour compenser la fragilité introduite par l'évidement de matière réalisé pour obtenir le logement 111.

Un procédé de montage d'un module de refroidissement 1 sur un véhicule selon l'invention comporte les étapes suivantes :
- assemblage du module de refroidissement 1 à une traverse inférieure 21 par l'intermédiaire des pattes 13a et 13b de fixation des boîtes collectrices 11a et 11b pour former un premier sous-ensemble ;
- positionnement du premier sous-ensemble à une face avant technique 2 selon un mouvement de direction verticale Z ;
- fixation de la traverse inférieure 21 à la face avant technique 2 ;
- fixation d'une pièce intermédiaire 12a et 12b dans le logement 111 dédié de chaque boîte collectrice 11a et 11b ;
- assemblage d'un élément de fixation 3a et 3b sur chaque pièce intermédiaire respectivement 12a et 12b ;
- positionnement des éléments de fixation 3a et 3b contre la face avant technique 2, ce qui permet un déplacement de la partie supérieure du module de refroidissement 1 selon un mouvement de direction longitudinale X ; et
- fixation des éléments de fixation 3a et 3b à la face avant technique 2.

L'étape de fixation d'une pièce intermédiaire 12a ou 12b dans le logement 111 dédié de chaque boîte collectrice 11a ou 11b comporte les sous-étapes suivantes :
- coulissement de la première partie 123 de la portion de retenue 121 dans le logement 111 (représentée aux figures 6a et 6b) ;
- mise en butée de la languette 112 sur l'ergot 126 (représentée à la figure 6c) ; et
- mise en place de la tige, par exemple une vis à l'aide d'une visseuse 4, dans les orifices 127 et 113 en renforcement de la position assemblée de la pièce intermédiaire 12a ou 12b et de la boîte collectrice 11a ou 11b (représentée à la figure 6d) .

L'invention est décrite dans ce qui précède à titre d'exemple.

## Revendications

1. Module de refroidissement (1) d'un moteur de véhicule, le module de refroidissement (1) comportant :
- un radiateur (10),
- au moins une boîte collectrice (11a, 11b) fixé au radiateur (10),
- un élément de fixation (3a, 3b) de la boîte collectrice (11a, 11b) au véhicule,
le module de refroidissement (1) étant **caractérisé en ce qu'**il comporte en outre :
- une pièce intermédiaire (12a, 12b) de fixation du de la boîte collectrice (11a, 11b) à l'élément de fixation (3a, 3b), la pièce intermédiaire (12a, 12b) comportant une portion de retenue (121),
- la boîte collectrice (11a, 11b) comportant un logement (111) agencé pour coopérer avec la portion de retenue (121) de la pièce intermédiaire (12a, 12b) afin de fixer la pièce intermédiaire (12a, 12b) à la boîte collectrice (11a, 11b) dans une position assemblée
- et **en ce que** la pièce intermédiaire (12a, 12b) comporte un doigt (122) agencé pour coopérer avec l'élément de fixation (3a, 3b) afin de fixer la pièce intermédiaire (12a, 12b) à l'élément de fixation (3a, 3b) et que le doigt (122) est en saillie latérale de la pièce intermédiaire.

2. Module de refroidissement (1) selon la revendication 1 **caractérisé en ce que** la portion de retenue (121) comporte une première partie (123) et une deuxième partie (124), la première partie (123) et la deuxième partie (124) formant un L.

3. Module de refroidissement (1) selon la revendication 2 **caractérisé en ce que** la première partie (123) est agencée pour coulisser dans le logement (111) de la boîte collectrice (11a, 11b).

4. Module de refroidissement (1) selon la revendication 3 **caractérisé en ce que** la deuxième partie (124) comporte une extrémité distale (125) équipée d'un ergot (126) et **en ce que** la boîte collectrice (11a, 11b) comporte, en périphérie du logement (111), une languette (112) déformable élastiquement agencée pour coopérer avec l'ergot (126) afin de maintenir la position assemblée de la pièce intermédiaire (12a, 12b) et du réservoir (11a, 11b) .

5. Module de refroidissement (1) selon la revendication 4 **caractérisé en ce que** l'ergot (126) comporte une première face (R) arrondie et une deuxième face (P) plane, la première face (R) et la deuxième face (P) comportant une arête commune et étant agencées de sorte que lors du coulissement de la première partie (123) de la pièce intermédiaire (12a, 12b) dans le logement (111) de la boîte collectrice (11a, 11b), la languette (112) se déforme élastiquement pour glisser le long de la première face (R) arrondie puis passe l'arête pour finir en butée contre la deuxième face (P).

6. Module de refroidissement (1) selon l'une quelconque des revendications précédentes **caractérisé en ce que** la portion de retenue (121) et la boîte collectrice (11a, 11b) comportent chacun un orifice, l'orifice (127) de la portion de retenue étant destiné à être en regard de l'orifice (113) de la boîte collectrice (11a, 11b) en position assemblée de sorte à permettre la fixation de la pièce intermédiaire (12a, 12b) à la boîte collectrice(11a, 11b) par l'intermédiaire d'une tige, comme une vis ou un goujon, introduite dans les orifices.

7. Module de refroidissement (1) selon l'une quelconque des revendications précédentes **caractérisé en ce qu'**il comporte :
- deux boîtes collectrices (11a, 11b) fixés de part et d'autre du radiateur (10),
- un élément de fixation (3a, 3b) par boîte collectrice (11a, 11b),
- une pièce intermédiaire (12a, 12b) par boîte collectrice (11a, 11b).

8. Module de refroidissement (1) selon la revendication 7 **caractérisé en ce qu'**il comporte en outre une patte (13a, 13b) de fixation par boîte collectrice (11a, 11b) ; pour chaque réservoir (11a, 11b), la pièce intermédiaire (12a, 12b) étant destinée à être fixée à une première extrémité de la boîte collectrice (11a, 11b) et la patte (13a, 13b) étant placée à une deuxième extrémité opposée à la première extrémité.

9. Procédé de montage d'un module de refroidissement (1) selon la revendication 8 sur un véhicule **caractérisé en ce qu'**il comporte les étapes suivantes :
- assemblage du module de refroidissement (1) à une traverse inférieure (21) par l'intermédiaire des pattes (13a, 13b) de fixation des boîtes collectrices (11a, 11b) pour former un premier sous-ensemble ;
- positionnement du premier sous-ensemble à une face avant technique (2) selon un mouvement de direction verticale ;
- fixation de la traverse inférieure (21) à la face avant technique (2) ;
- fixation d'une pièce intermédiaire (12a, 12b) dans le logement (111) dédié de chaque boîte collectrice (11a, 11b) ;
- assemblage d'un élément de fixation (3a, 3b) sur chaque pièce intermédiaire (12a, 12b) ;
- positionnement des éléments de fixation (3a ; 3b) contre la face avant technique (2), ce qui permet un déplacement de la partie supérieure du module de refroidissement 1 selon un mouvement de direction longitudinale ; et
- fixation des éléments de fixation (3a, 3b) à la face avant technique (2).

10. Procédé de montage d'un module de refroidissement (1) selon la revendication 9 lorsqu'elle est elle-même dépendante des revendications 4 ou 5 et 6 **caractérisé en ce que** l'étape de fixation d'une pièce intermédiaire (12a, 12b) dans le logement (111) dédié de chaque boîte collectrice (11a, 11b) comporte les sous-étapes suivantes :
- coulissement de la première partie (123) de la portion de retenue (121) dans le logement (111) ;
- mise en butée de la languette (112) sur l'ergot (126) ; et
- mise en place de la tige dans les orifices (127, 113) en renforcement de la position assemblée de la pièce intermédiaire (12a, 12b) et de la boîte collectrice (11a, 11b).

## Patentansprüche

1. Modul (1) zum Kühlen eines Fahrzeugmotors, wobei das Kühlmodul (1) Folgendes aufweist:
- einen Radiator (10),
- mindestens einen am Radiator (10) befestigten Sammelbehälter (11a, 11b),
- ein Element (3a, 3b) zur Befestigung des Sammelbehälters (11a, 11b) am Fahrzeug,
wobei das Kühlmodul (1) **dadurch gekennzeichnet ist, dass** es ferner Folgendes aufweist:
- ein Zwischenstück (12a, 12b) zum Befestigen des Sammelbehälters (11a, 11b) am Befestigungselement (3a, 3b), wobei das Zwischenstück (12a, 12b) einen Halteabschnitt (121) aufweist,
- wobei der Sammelbehälter (11a, 11b) eine Aufnahme (111) aufweist, die dazu angeordnet ist, mit dem Halteabschnitt (121) des Zwischenstücks (12a, 12b) zusammenzuwirken, um das Zwischenstück (12a, 12b) in einer Verbindungsposition am Sammelbehälter (11a, 11b) zu befestigen,
- und dass das Zwischenstück (12a, 12b) einen Finger (122) aufweist, der dazu angeordnet ist, mit dem Befestigungselement (3a, 3b) zusammenzuwirken, um das Zwischenstück (12a, 12b) am Befestigungselement (3a, 3b) zu befestigen, und dass der Finger (122) seitlich vom Zwischenstück vorsteht.

2. Kühlmodul (1) nach Anspruch 1, **dadurch gekennzeichnet, dass** der Halteabschnitt (121) einen ersten Teil (123) und einen zweiten Teil (124) aufweist, wobei der erste Teil (123) und der zweite Teil (124) ein L bilden.

3. Kühlmodul (1) nach Anspruch 2, **dadurch gekennzeichnet, dass** der erste Teil (123) dazu angeordnet ist, in der Aufnahme (111) des Sammelbehälters (11a, 11b) zu gleiten.

4. Kühlmodul (1) nach Anspruch 3, **dadurch gekennzeichnet, dass** der zweite Teil (124) ein distales Ende (125) aufweist, das mit einem Vorsprung (126) versehen ist, und dass der Sammelbehälter (11a, 11b) am Umfang der Aufnahme (111) eine elastisch verformbare Zunge (112) aufweist, die dazu angeordnet ist, mit dem Vorsprung (126) zusammenzuwirken, um die Verbindungsposition des Zwischenstücks (12a, 12b) und des Behälters (11a, 11b) aufrechtzuerhalten.

5. Kühlmodul (1) nach Anspruch 4, **dadurch gekennzeichnet, dass** der Vorsprung (126) eine erste abgerundete Fläche (R) und eine zweite ebene Fläche (P) aufweist, wobei die erste Fläche (R) und die zweite Fläche (P) eine gemeinsame Kante aufweisen und so angeordnet sind, dass sich beim Gleiten des ersten Teils (123) des Zwischenstücks (12a, 12b) in der Aufnahme (111) des Sammelbehälters (11a, 11b) die Zunge (112) elastisch verformt, um entlang der ersten abgerundeten Fläche (R) zu gleiten, dann die Kante passiert, um schließlich an der zweiten Fläche (P) zur Anlage zu kommen.

6. Kühlmodul (1) nach einem der vorangehenden Ansprüche, **dadurch gekennzeichnet, dass** der Halteabschnitt (121) und der Sammelbehälter (11a, 11b) jeweils eine Öffnung aufweisen, wobei die Öffnung (127) des Halteabschnitts dazu bestimmt ist, in der Verbindungsposition der Öffnung (113) des Sammelbehälters (11a, 11b) gegenüberzuliegen, um die Befestigung des Zwischenstücks (12a, 12b) am Sammelbehälter (11a, 11b) über einen in die Öffnungen eingeführten Schaft, wie etwa eine Schraube oder einen Bolzen, zu ermöglichen.

7. Kühlmodul (1) nach einem der vorangehenden Ansprüche, **dadurch gekennzeichnet, dass** es Folgendes aufweist:
- zwei Sammelbehälter (11a, 11b), die auf beiden Seiten des Radiators (10) befestigt sind,
- ein Befestigungselement (3a, 3b) pro Sammelbehälter (11a, 11b),
- ein Zwischenstück (12a, 12b) pro Sammelbehälter (11a, 11b).

8. Kühlmodul (1) nach Anspruch 7 **dadurch gekennzeichnet, dass** es ferner eine Befestigungslasche (13a, 13b) pro Sammelbehälter (11a, 11b) aufweist; wobei bei jedem Behälter (11a, 11b) das Zwischenstück (12a, 12b) dazu bestimmt ist, an einem ersten Ende des Sammelbehälters (11a, 11b) befestigt zu sein, und wobei die Lasche (13a, 13b) an einem dem ersten Ende gegenüberliegenden zweiten Ende angeordnet ist.

9. Verfahren zur Montage eines Kühlmoduls (1) nach Anspruch 8 an einem Fahrzeug, **dadurch gekennzeichnet, dass** es die folgenden Schritte aufweist:
- Verbinden des Kühlmoduls (1) an einem unteren Querträger (21) über Laschen (13a, 13b) zur Befestigung der Sammelbehälter (11a, 11b), um eine erste Unterbaugruppe zu bilden;
- Positionieren der ersten Unterbaugruppe an einer technischen Vorderseite (2) in einer Bewegung in vertikaler Richtung;
- Befestigen des unteren Querträgers (21) an der technischen Vorderseite (2);
- Befestigen eines Zwischenstücks (12a, 12b) in der dedizierten Aufnahme (111) jedes Sammelbehälters (11a, 11b) ;
- Verbinden eines Befestigungselements (3a, 3b) an jedem Zwischenstück (12a, 12b);
- Positionieren der Befestigungselemente (3a; 3b) gegen die technische Vorderseite (2), wodurch die Verschiebung des oberen Teils des Kühlmoduls 1 in einer Bewegung in Längsrichtung ermöglicht wird; und
- Befestigen der Befestigungselemente (3a, 3b) an der technischen Vorderseite (2).

10. Verfahren zur Montage eines Kühlmoduls (1) nach Anspruch 9, wenn dieser selbst von den Ansprüchen 4 oder 5 und 6 abhängig ist, **dadurch gekennzeichnet, dass** der Schritt des Befestigens eines Zwischenstücks (12a, 12b) in der dedizierten Aufnahme (111) jedes Sammelbehälters (11a, 11b) die folgenden Teilschritte aufweist:
- Einschieben des ersten Teils (123) des Halteabschnitts (121) in die Aufnahme (111);
- In-Anschlag-Bringen der Zunge (112) am Vorsprung (126) und
- Einsetzen des Schafts in die Öffnungen (127, 113) zur Verstärkung der Verbindungsposition des Zwischenstücks (12a, 12b) und des Sammelbehälters (11a, 11b) .

## Claims

1. Cooling module (1) for a vehicle engine, the cooling module (1) having:
- a radiator (10),
- at least one header tank (11a, 11b) fixed to the radiator (10),
- a fixing element (3a, 3b) for fixing the header tank (11a, 11b) to the vehicle,
the cooling module (1) being **characterized in that** it also has:
- an intermediate component (12a, 12b) for fixing the header tank (11a, 11b) to the fixing element (3a, 3b), the intermediate component (12a, 12b) having a retaining portion (121),
- the header tank (11a, 11b) having a housing (111) designed to cooperate with the retaining portion (121) of the intermediate component (12a, 12b) in order to fix the intermediate component (12a, 12b) to the header tank (11a, 11b) in an assembled position,
- and **in that** the intermediate component (12a, 12b) has a finger (122) designed to cooperate with the fixing element (3a, 3b) in order to fix the intermediate component (12a, 12b) to the fixing element (3a, 3b), and **in that** the finger (122) protrudes laterally from the intermediate component.

2. Cooling module (1) according to Claim 1, **characterized in that** the retaining portion (121) has a first part (123) and a second part (124), the first part (123) and the second part (124) forming an L.

3. Cooling module (1) according to Claim 2, **characterized in that** the first part (123) is designed to slide in the housing (111) of the header tank (11a, 11b) .

4. Cooling module (1) according to Claim 3, **characterized in that** the second part (124) has a distal end (125) equipped with a lug (126), and **in that** the header tank (11a, 11b) has, at the periphery of the housing (111), an elastically deformable tongue (112) designed to cooperate with the lug (126) in order to maintain the assembled position of the intermediate component (12a, 12b) and the tank (11a, 11b).

5. Cooling module (1) according to Claim 4, **characterized in that** the lug (126) has a first, rounded face (R) and a second, flat face (P), the first face (R) and the second face (P) having a common edge corner and being designed such that, while the first part (123) of the intermediate component (12a, 12b) slides in the housing (111) of the header tank (11a, 11b), the tongue (112) deforms elastically so as to slide along the first, rounded face (R) and then passes over the edge corner in order to end up in abutment against the second face (P).

6. Cooling module (1) according to any one of the preceding claims, **characterized in that** the retaining portion (121) and the header tank (11a, 11b) each have an orifice, the orifice (127) in the retaining portion being intended to face the orifice (113) in the header tank (11a, 11b) in the assembled position so as to allow the intermediate component (12a, 12b) to be fixed to the header tank (11a, 11b) via a stem, such as a screw or a stud, introduced into the orifices.

7. Cooling module (1) according to any one of the preceding claims, **characterized in that** it has:
- two header tanks (11a, 11b) fixed on either side of the radiator (10),
- one fixing element (3a, 3b) per header tank (11a, 11b),
- one intermediate component (12a, 12b) per header tank (11a, 11b).

8. Cooling module (1) according to Claim 7, **characterized in that** it also has one fixing tab (13a, 13b) per header tank (11a, 11b); for each tank (11a, 11b), the intermediate component (12a, 12b) being intended to be fixed to a first end of the header tank (11a, 11b) and the tab (13a, 13b) being placed at a second end opposite to the first end.

9. Method for mounting a cooling module (1) according to Claim 8 on a vehicle, **characterized in that** it includes the following steps of:
- assembling the cooling module (1) on a lower cross member (21) via the fixing tabs (13a, 13b) of the header tanks (11a, 11b) so as to form a first subassembly;
- positioning the first subassembly on a technical front face (2) by way of a movement in a vertical direction;
- fixing the lower cross member (21) to the technical front face (2);
- fixing an intermediate component (12a, 12b) in the dedicated housing (111) of each header tank (11a, 11b) ;
- assembling a fixing element (3a, 3b) on each intermediate component (12a, 12b);
- positioning the fixing elements (3a; 3b) against the technical front face (2), thereby allowing the upper part of the cooling module (1) to move with a movement in a longitudinal direction; and
- fixing the fixing elements (3a, 3b) to the technical front face (2).

10. Method for mounting a cooling module (1) according to Claim 9, when the latter is itself dependent on Claims 4 or 5 and 6, **characterized in that** the step of fixing an intermediate component (12a, 12b) in the dedicated housing (111) of each header tank (11a, 11b) includes the following sub-steps of:
- sliding the first part (123) of the retaining portion (121) in the housing (111);
- bringing the tongue (112) into abutment against the lug (126); and
- fitting the stem into the orifices (127, 113), reinforcing the assembled position of the intermediate component (12a, 12b) and of the header tank (11a, 11b).
